# DEMANDE DE BREVET EUROPEEN

(11) **EP 1 455 081 A1**
(43) Date de publication de la demande: **08.09.2004**
(21) Numéro de dépôt: 04300125.4
(22) Date de dépôt: 08.03.2004
(51) Int. Cl.: F02M 35/104

(54) **Répartiteur d'admission d'air pour moteur à combustion interne**

(30) Priorité: 07.03.2003 FR 0302862
(71) Demandeur: Renault s.a.s., 92100 Boulogne Billancourt (FR)
(72) Inventeur: Dupont, Alain, 78860 Saint Nom la Breteche (FR); Guilain, Stéphane, 91150 Etampes (FR)

(57) **Abrégé**

L'invention concerne un répartiteur d'admission d'air (10) pour moteur à combustion interne, comprenant un conduit d'entrée d'air (12) débouchant dans un plénum (14), le plénum étant relié à une pluralité de conduits primaires (16a,...), le répartiteur comprenant :
- une première surface de raccordement (18) de rayon de courbure (R) entre le conduit d'entrée d'air (12) et le plénum (14) à proximité du conduit primaire le plus proche (16a) du conduit d'entrée d'air (12), le rayon de courbure (R) étant tel que l'air est guidé correctement vers ledit conduit primaire le plus proche (16a), cette première surface de raccordement (18) étant suivie d'un saut de section (22) tel que tous les conduits primaires (16a,...) aient un comportement acoustique sensiblement équivalent, et
- une deuxième surface de raccordement (24) de rayon de courbure (r) entre le saut de section (22) et ledit conduit primaire le plus proche (16a).

## Description

L'invention concerne un répartiteur d'admission d'air pour moteur à combustion interne.

En raison de l'importance du remplissage en air pour les performances des moteurs, un soin particulier est apporté à la géométrie des répartiteurs. Ces derniers comprennent un conduit d'entrée d'air débouchant dans un plénum auquel sont reliés les conduits primaires (ou primaires) qui mènent aux cylindres du moteur.

Notamment, la quantité d'air admise dans le moteur dépend, pour tout régime, de la qualité de réflexion des ondes associées à la dépression émise par chaque cylindre du moteur au niveau du raccord entre les primaires et le plénum du répartiteur. Pour certains moteurs, il est préférable que cette réflexion soit la plus importante possible. Il est de plus indispensable que les primaires du moteur présentent un comportement acoustique équivalent. Enfin, afin d'atteindre la puissance spécifique voulue, il est nécessaire que chaque partie respecte une perméabilité minimale, c'est-à-dire une capacité à laisser passer le débit d'air, cette valeur minimale étant optimisée.

Afin de respecter l'accord acoustique quart d'onde utilisé au couple maximal, il peut être nécessaire de réaliser un saut de section représentant un élargissement suffisant lorsque l'on passe du primaire au plénum, et ce, si possible, sur toute la périphérie de la section de communication. L'optimisation de la perméabilité est en général obtenue en plaçant un diffuseur dans le conduit d'entrée du plénum et une surface de raccordement présentant un rayon de courbure à l'entrée des primaires.

Cependant, plusieurs problèmes peuvent se poser dans des architectures très contraintes géométriquement, notamment pour les répartiteurs dans lesquels un primaire est situé à proximité du conduit d'entrée d'air. Par exemple, la réalisation d'une surface de raccordement présentant un rayon de courbure entre le conduit d'entrée et le plénum ne permet plus de respecter le saut de section acoustique entre le plénum et le primaire situé à proximité du conduit d'entrée. Ce dernier présente alors un comportement acoustique différent des autres primaires, de sorte qu'il est difficile d'utiliser les ondes de dépression émises par les cylindres pour créer une surpression au moment de l'admission de l'air qui puisse optimiser la quantité d'air admise dans les cylindres. Une telle géométrie privilégie la perméabilité et donc la puissance au détriment du comportement acoustique.

Un autre problème peut se poser lorsqu'un saut de section est réalisé entre le plénum et le primaire situé à proximité du conduit d'entrée. Le raccordement entre ce primaire et le plénum est alors tel que ce primaire, et par conséquent le cylindre relié à ce primaire, est défavorisé en terme de perte de charge.

L'invention vise à pallier à ces inconvénients en proposant un répartiteur d'admission d'air dont la géométrie permet à la fois d'améliorer l'amplitude de l'accord acoustique sur l'ensemble des primaires, et en particulier sur le primaire situé le plus près du conduit d'entrée du plénum, et de minimiser les pertes de charge de ce même primaire.

A cet effet, l'objet de l'invention concerne un répartiteur d'admission d'air pour moteur à combustion interne, comprenant un conduit d'entrée d'air débouchant dans un plénum, le plénum étant relié à une pluralité de conduits primaires, le répartiteur comprenant :
- une première surface de raccordement de rayon de courbure R entre le conduit d'entrée d'air et le plénum à proximité du conduit primaire le plus proche du conduit d'entrée d'air, le rayon de courbure R étant tel que l'air est guidé correctement vers ledit conduit primaire le plus proche, cette première surface de raccordement étant suivie d'un saut de section tel que tous les conduits primaires aient un comportement acoustique sensiblement équivalent, et
- une deuxième surface de raccordement de rayon de courbure r entre le saut de section et ledit conduit primaire le plus proche du conduit d'entrée.

Le rayon de courbure R de la première surface permet de guider l'air vers le primaire le plus proche tout en optimisant la perméabilité. Le saut de section permet d'améliorer l'amplitude de l'accord acoustique entre les primaires, tandis que le rayon de courbure r de la deuxième surface de raccordement permet de minimiser les pertes de charge dans le primaire le plus proche du conduit d'entrée.

Avantageusement, le saut de section présente en section longitudinale une largeur d et une hauteur h, la hauteur h étant supérieure ou égale à 0,2 fois le diamètre D des conduits primaires.

Egalement avantageusement, la première surface de raccordement s'étend en section longitudinale sur une distance inférieure ou égale à la largeur d du saut de section afin de minimiser la perte de charge au niveau du conduit primaire le plus proche.

Plus particulièrement, chaque conduit primaire est relié au plénum par une surface de raccordement de rayon de courbure r'.

Avantageusement, le rayon de courbure r et/ou le rayon de courbure r' est sensiblement égal à 0,2 fois le diamètre D des conduits primaires, afin d'améliorer le comportement acoustique. De préférence, ces rayons r et r' sont égaux.

L'invention est maintenant décrite en référence aux dessins annexés, non limitatifs, dans lesquels :
- la figure 1 est une vue partielle en coupe longitudinale d'un mode de réalisation d'un répartiteur d'admission d'air selon l'invention ;
- la figure 2 est une vue agrandie en coupe longitudinale de la zone entre le conduit d'entrée et le primaire le plus proche d'un autre mode de réalisation d'un répartiteur selon l'invention.

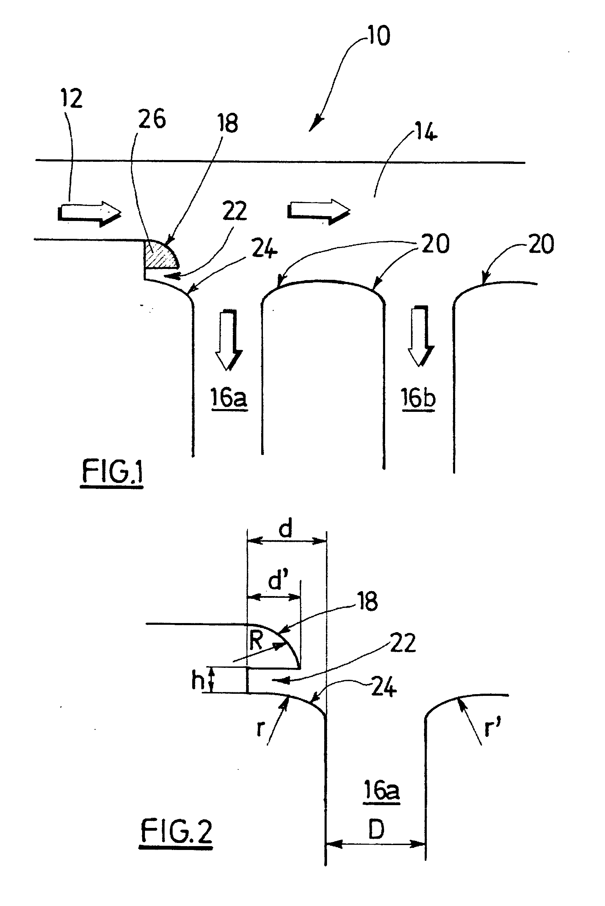

En référence à la figure 1, le répartiteur 10 présente un conduit d'entrée d'air 12 débouchant dans un plénum 14 auquel sont reliés des conduits primaires (ou primaires) 16a, 16b,..., 16n qui mènent chacun à l'un des n cylindres du moteur (non représentés). Le sens d'écoulement de l'air est représenté par les flèches sur la figure 1. Le plénum 14 est en général de dimensions supérieures à celles du conduit d'entrée. Seuls deux primaires 16a, 16b sont représentés sur la figure 1 pour plus de clarté, le primaire 16a étant situé le plus près du conduit d'entrée 12.

Le répartiteur 10 présente une première surface de raccordement 18 présentant un rayon de courbure R entre le conduit d'entrée d'air 12 et le primaire 16a le plus proche. Le rayon de courbure R est choisi de manière à guider correctement le flux d'air vers l'entrée du primaire 16a. En section longitudinale, la première surface de raccordement 18 s'étend sur une distance d' suivant l'axe du conduit d'entrée 12 (figure 2).

Les autres primaires 16b,..., 16n présentent chacun sur tout leur pourtour une surface de raccordement 20 de rayon de courbure r' avec le plénum 14. La partie du primaire 16a éloignée du conduit d'entrée 12 présente également une surface de raccordement 20 de rayon de courbure r' avec le plénum 14.

La première surface de raccordement 18 est suivie d'un saut de section 22 s'étendant en section longitudinale sur une distance d suivant l'axe du conduit d'entrée 12 et sur une hauteur h suivant l'axe du primaire 16a (figure 2). Ce saut de section doit être suffisamment profond pour que le primaire 16a présente un comportement acoustique sensiblement équivalent aux autres primaires 16n.

Ce saut de section 22 est relié à la paroi du primaire 16a par une deuxième surface de raccordement 24 présentant un rayon de courbure r. Cette deuxième surface de raccordement 24 s'étend ainsi sur la distance d suivant l'axe du conduit d'entrée 12. Elle permet de limiter la perte de charge à l'entrée du primaire 16a.

Afin d'optimiser l'admission d'air dans les cylindres, la hauteur h du saut de section est de préférence supérieure ou égale à 0,2 fois la valeur du diamètre D des primaires 16n, tous les primaires présentant de préférence le même diamètre D. Les rayons de courbure r' et r sont choisis sensiblement égaux à 0,2 fois le diamètre D. La distance d' de la première surface de raccordement 18 est inférieure ou égale à la distance d de la deuxième surface de raccordement 24 afin de limiter au maximum la perte de charge au niveau de l'entrée du primaire 16a.

Il est toutefois envisageable d'utiliser d'autres valeurs et relations pour ces mesures en fonction de la géométrie du répartiteur.

La première surface de raccordement 18 peut être réalisée dans la masse du répartiteur 10 de façon à former une pièce unique, tel que représenté dans le mode de réalisation de la figure 2.

Dans un autre mode de réalisation, la première surface 18 est formée d'un élément 26 en forme de lame ou de bec fixé entre le conduit d'entrée d'air et le bord du conduit primaire le plus proche. Cet élément 26 est représenté en hachuré sur la figure 1.

Le répartiteur selon l'invention est particulièrement adapté aux architectures très contraintes géométriquement, pour lesquelles la distance d sur laquelle s'étend le saut de section 22 est très faible. Il est alors possible de maintenir un niveau de perméabilité suffisant tout en conservant une réflexion correcte au niveau du plénum des ondes associées aux dépressions émises par tous les cylindres.

## Revendications

1. Répartiteur d'admission d'air (10) pour moteur à combustion interne, comprenant un conduit d'entrée d'air (12) débouchant dans un plénum (14), le plénum étant relié à une pluralité de conduits primaires (16n), le répartiteur comprenant :
- une première surface de raccordement (18) de rayon de courbure (R) entre le conduit d'entrée d'air (12) et le plénum (14) à proximité du conduit primaire le plus proche (16a) du conduit d'entrée d'air (12), le rayon de courbure (R) étant tel que l'air est guidé correctement vers ledit conduit primaire le plus proche (16a), cette première surface de raccordement (18) étant suivie d'un saut de section (22) tel que tous les conduits primaires (16n) aient un comportement acoustique sensiblement équivalent, et
- une deuxième surface de raccordement (24) de rayon de courbure (r) entre le saut de section (22) et ledit conduit primaire le plus proche (16a) du conduit d'entrée (12).

2. Répartiteur selon la revendication 1, **caractérisé en ce que** le saut de section (22) s'étend en section longitudinale sur une distance (d) et une hauteur (h), la hauteur (h) étant supérieure ou égale à 0,2 fois le diamètre (D) des conduits primaires.

3. Répartiteur selon la revendication 2, **caractérisé en ce que** la première surface de raccordement (18) s'étend en section longitudinale sur une distance (d') inférieure ou égale à la distance (d).

4. Répartiteur selon l'une des revendications 1 à 3, **caractérisé en ce que** chaque conduit primaire (16n) est relié au plénum (14) par une surface de raccordement (20) de rayon de courbure (r').

5. Répartiteur selon l'une des revendications 1 à 4, **caractérisé en ce que** le rayon de courbure (r) et/ou le rayon de courbure (r') est sensiblement égal à 0,2 fois le diamètre (D) des conduits primaires.

6. Répartiteur selon l'une des revendications 1 à 5, **caractérisé en ce que** la première surface de raccordement (18) est formée dans la masse du répartiteur.

7. Répartiteur selon l'une des revendications 1 à 5, **caractérisé en ce que** la première surface de raccordement (18) est formée par un élément (26) en forme de lame ou de bec fixé entre le conduit d'entrée d'air (12) et le bord du conduit primaire le plus proche (16a).
